Europäisches Patentamt

European Patent Office

Office européen des brevets

(19)

(11) Numéro de publication : **0 060 204**
**B1**

(12) **FASCICULE DE BREVET EUROPÉEN**

(45) Date de publication du fascicule du brevet :
09.07.86

(51) Int. Cl.⁴ : **A 47 J 37/12, G 07 F 9/10**

(21) Numéro de dépôt : **82400436.0**

(22) Date de dépôt : **11.03.82**

(54) Friteuse industrielle.

(30) Priorité : **13.03.81 FR 8105027**

(43) Date de publication de la demande :
**15.09.82 Bulletin 82/37**

(45) Mention de la délivrance du brevet :
**09.07.86 Bulletin 86/28**

(84) Etats contractants désignés :
**BE DE GB IT LU NL**

(56) Documents cités :
**BE-A- 704 788**
**DE-A- 2 256 108**
**FR-A- 1 526 864**
**FR-A- 2 109 537**
**FR-A- 2 249 637**
**US-A- 2 074 044**
**US-A- 2 108 627**
**US-A- 2 134 088**
**US-A- 2 175 531**
**US-A- 2 254 824**
**US-A- 3 357 341**

(73) Titulaire : **Mariotti, René**
**30 rue du Calvaire**
**F-92210 Saint-Cloud (FR)**

(72) Inventeur : **Mariotti, René**
**30 rue du Calvaire**
**F-92210 Saint-Cloud (FR)**

(74) Mandataire : **Sauvage, Renée**
**CABINET SAUVAGE 100 bis, avenue de Saint-Mandé**
**F-75012 Paris (FR)**

Jouve, 18, rue St-Denis, 75001 Paris, France

## Description

La présente invention a pour objet une friteuse industrielle, notamment adaptée à la cuisson de doses successives d'aliments surgelés consommables après friture et à la distribution de ces doses dans des gobelets.

La friteuse selon l'invention peut en particulier être réalisée sous la forme d'une machine, déclenchée par l'introduction d'une pièce ou d'un jeton, distribuant à la demande des aliments frits, extemporanément. Il peut s'agir de frites ou de tous autres aliments susceptibles d'être surgelés et cuits par friture, tels que croquettes de poisson, beignets, etc...

Il existe déjà des friteuses industrielles du type précité. Elles n'ont guère rencontré de succès commercial en raison des résultats décevants qu'elles fournissent, ce, pour diverses raisons qui proviennent notamment de l'exposition de l'huile de friture à l'air, à la lumière et à des températures élevées, du séjour dans cette huile de débris d'aliments de plus en plus calcinés, du mode de dosage des aliments surgelés qui entraîne souvent une décongélation de ces aliments avant friture et un écrasement de ces aliments dans le dispositif de dosage, sans parler d'une grande irrégularité dans les doses fournies et de défauts de distribution affectant les gobelets chargés de recueillir ces doses une fois cuites.

Ainsi, dans l'installation décrite par le document FR-A-1 526 864, l'huile parcourt en continu pendant la cuisson, un circuit d'où est exclu le réservoir de stockage. L'huile ne séjourne pas dans la cuve de cuisson, elle arrose les aliments et s'écoule par le bas de la cuve. La division de l'huile en fines gouttelettes pendant l'arrosage favorise une oxydation nuisible.

Le document FR-A-2 109 537 décrit, de son côté, un distributeur automatique de pommes de terre frites dans lequel un panier perforé pivotant est susceptible d'être plongé « dans un pot de friture rempli d'huile maintenue à une température constante de façon appropriée ». L'huile reste constamment dans le pot de friture de sorte qu'elle est exposée à l'oxygène de l'air et que les débris de friture s'y accumulent.

La friture selon l'invention élimine tous ces inconvénients.

Le problème fondamental qui devait être résolu pour ces friteuses était de conserver l'huile de friture dans le meilleur état possible, ce qui a pu être fait en n'admettant l'huile dans la cuve de friture qu'au moment où une cuisson est demandée et en vidant la cuve immédiatement après, l'huile provenant de, et revenant après filtration dans, un réservoir étanche à l'air.

Plus précisément, pour le remplissage de la cuve à l'aide d'huile et pour l'évacuation de cette huile après utilisation, le demandeur a mis au point un procédé qui consiste à appliquer :
— pour le remplissage, une pression à la surface de l'huile contenue dans un réservoir étanche à l'air en permettant à l'huile ainsi déplacée de sortir dudit réservoir en direction de la cuve, et
— pour l'évacuation, une dépression à la surface de l'huile contenue dans ledit réservoir en n'autorisant le retour de l'huile précédemment injectée dans la cuve qu'au travers d'un dispositif de filtration.

Un procédé de circulation d'huile sensiblement voisin est connu d'après le brevet BE-A-704 788.

Le procédé selon l'invention se caractérise en ce que le remplissage et l'évacuation sont séquentiels et en ce que sont prévus, entre le réservoir et la cuve, des moyens de chauffage de l'huile contenue dans une zone reliant le réservoir à la cuve, de sorte que l'admission, dans cette zone, de l'huile déplacée provenant du réservoir en chasse le volume correspondant d'huile chaude, laquelle pénètre dans la cuve.

Dans la pratique, la friteuse selon l'invention comprend donc :
— un réservoir d'huile, étanche à l'air, formant cylindre et muni d'un piston, ledit réservoir étant pourvu d'une ouverture de refoulement d'huile et d'une ouverture de réadmission d'huile munie de moyens obturateurs qui ne s'ouvrent que sous l'effet d'une pression négative intérieure au réservoir ;
— une cuve de friture pourvue d'une ouverture d'alimentation en huile, munie de moyens obturateurs qui ne s'ouvrent que sous l'effet d'une pression positive extérieure à la cuve, et d'une ouverture d'évacuation d'huile garnie de moyens de filtration ;
— une première conduite reliant l'ouverture de refoulement du réservoir et l'ouverture d'alimentation de la cuve, avec interposition, entre ces ouvertures, de moyens de chauffage de l'huile contenue dans ladite première conduite ;
— une seconde conduite reliant l'ouverture d'évacuation de la cuve et l'ouverture de réadmission du réservoir.

Pour renforcer la protection de l'huile, on préfère que le réservoir soit non seulement étanche à l'air, mais encore à la lumière, et que la cuve forme une enceinte hermétiquement fermée.

On comprend que, de cette manière, l'huile est protégée au maximum des facteurs de dégradation (oxygène, rayons ultra-violets, températures élevées, etc...) du fait de son stockage dans un réservoir séparé de la cuve de friture et que, même pendant la friture, la quantité d'huile exposée à l'air inclus dans la cuve fermée, ne l'est que pendant une courte période avant d'être remélangée à la quantité d'huile, d'un volume bien supérieur, contenue dans le réservoir. Par ailleurs, l'huile en réserve n'est pas souillée par les débris d'aliments qui ont pu s'échapper du panier pendant la cuisson, car ces débris sont retenus par un dispositif de filtration interposé sur la voie de retour entre la cuve et le réservoir.

Dans une forme d'exécution préférée, les ouvertures d'admission d'huile et d'évacuation d'huile de la cuve sont prévues au niveau de son fond.

Dans les machines du type considéré, les aliments surgelés à frire sont stockés dans un compartiment isolé thermiquement et maintenu à une température appropriée et, canalisés par une trémie, ils tombent soit dans une mesure évidée dans un cylindre bouchant l'ouverture de la trémie auquel cas le dosage de chaque portion est volumétrique, soit sur le plateau d'une balance, auquel cas le dosage est pondéral.

C'est à ce second type qu'appartient la machine selon l'invention. Plus précisément, l'unité de conservation des aliments surgelés et de dosage des portions successives de ces aliments comprend un compartiment fermé isolé thermiquement et maintenu à une température appropriée, lequel compartiment renferme :

— un bac à aliments surgelés s'ouvrant sur des moyens convoyeurs ;

— des moyens convoyeurs recueillant les aliments en provenance dudit bac et les acheminant vers le plateau récepteur d'une balance ;

— une balance dont le plateau récepteur de produits à peser comporte des moyens d'évacuation qui débouchent au-dessus d'une ouverture pratiquée dans la paroi du compartiment ;

— des organes commandant l'avancée des moyens convoyeurs en réponse aux indications fournies par la balance ; et

— des organes commandant le déclenchement des moyens d'évacuation du plateau récepteur de la balance, en réponse à une sollicitation extérieure.

Dans une forme d'exécution préférée, le plateau récepteur de la balance revêt la forme d'une cuvette dont le fond est constitué par le rapprochement des bords libres d'éléments séparés constituant ladite cuvette, ces éléments étant montés pivotants de manière à pouvoir se rapprocher l'un de l'autre (position de pesée) ou à s'écarter l'un de l'autre (position d'évacuation de la portion pesée).

Ainsi, les aliments pesés chutent naturellement par le fond ouvert de la cuvette et ne peuvent être écrasés par aucune pièce en mouvement.

Dans une forme d'exécution de la friteuse selon l'invention la cuve de friture est constituée d'une enceinte hermétiquement fermée comportant une porte latérale pour le chargement et le déchargement du panier ajouré adapté au trempage des aliments dans l'huile de la cuve, ce panier ajouré se prolongeant à sa partie supérieure, du côté de la porte, par un déflecteur solidarisé de ladite porte de manière telle que l'ouverture de la porte expose au moins une partie du déflecteur à l'extérieur de l'enceinte.

Avantageusement, le fond du déflecteur est coextensif à la porte et le bas de la porte est monté pivotant sur la paroi de l'enceinte. De cette manière, la cuve de friture ne s'ouvre sur l'extérieur que pour le chargement et le déchargement du panier, alors qu'elle ne contient pas encore ou qu'elle ne contient plus d'huile. Le mouvement du panier est lié à celui de la porte, ce qui supprime tout mécanisme particulier pour le dégagement du panier hors de la cuve.

Dans les friteuses connues, la cuve ouverte est incluse dans une armoire qui comporte des moyens assurant la circulation de l'air entre une entrée et une sortie d'air pratiquées dans les parois de ladite armoire, avec interposition d'un dispositif filtrant sur le circuit de sortie d'air.

Une ventilation aspire l'air ambiant, le fait circuler aux alentours de l'huile en cours d'utilisation et le rejette à l'atmosphère. Il s'ensuit une pollution inévitable, du fait que le volume d'air brassé est important et que le dispositif filtrant est généralement insuffisant.

Selon l'invention, en aval du dispositif filtrant, le circuit d'air est relié à l'entrée d'air.

Ainsi, le volume d'air dans lequel se fait la friture n'est pas rejeté à l'atmosphère : il circule en circuit fermé, en étant débarrassé des graisses qu'il véhicule après son passage en surface de l'huile de friture, par le dispositif filtrant. Dans ce cas, la filtration est efficace car le volume d'air traité est faible. La vapeur d'eau provenant des aliments en cours de friture est condensée à l'extérieur de la cuve et éliminée avant le recyclage de l'air.

Il n'est pas indispensable que le dispositif filtrant débarrasse le courant d'air des odeurs dont il peut être chargé puisque ces odeurs sont fortement réduites par le soin qui est apporté à la conservation de l'huile et que, de toute manière, elles ne sont perceptibles qu'à l'intérieur de la cuve fermée.

Lors du déchargement du panier, les aliments frits tombent dans un gobelet. La friteuse doit donc être munie d'une unité distributrice de gobelets. Une telle unité comprend généralement un réservoir de gobelets renfermant une colonne de gobelets empilés les uns dans les autres, des moyens escamotables de retenue desdits gobelets coopérant avec le rebord du gobelet inférieur de la colonne, des organes commandant l'escamotage des moyens de retenue pour libérer un par un les gobelets de la colonne, un conduit de réception et de guidage du gobelet libéré et un plateau support pour le gobelet prêt à l'usage.

Pour éviter d'avoir à regarnir trop souvent l'appareil en gobelets, il est avantageux de prévoir un réservoir renfermant au moins deux colonnes de gobelets et de libérer alternativement un gobelet d'une colonne puis d'une autre.

A cette fin, selon l'invention, pour un couple de colonnes, les moyens escamotables comprennent sur deux côtés opposés des gobelets, d'une part, deux languettes déplaçables sur la même horizontale et, d'autre part, une barrette déplaçable sur une autre horizontale plus basse, la face inférieure des languettes étant séparée de la face supérieure de la barrette d'une hauteur au moins égale à celle du rebord des gobelets, la position relative des languettes et de la barrette étant telle qu'au repos, la barrette soutient le rebord du dernier gobelet de la première colonne tandis que la deuxième languette soutient le rebord du dernier gobelet de la deuxième colonne, lesdits moyens de commande agissant de manière que, dans un premier temps, ils déplacent la barrette hors du chemin de chute naturelle des gobelets de la première colonne et l'amènent dans une position interrompant le chemin de chute naturelle des gobelets de la deuxième colonne, tandis qu'animées du même mouvement la première languette vient retenir le gobelet de la première colonne suivant celui qui vient d'être libéré et la deuxième languette sort du chemin de chute des gobelets de la deuxième colonne, en libérant un gobelet qui est retenu par la barrette, et que, dans un deuxième temps, ils déplacent la barrette et les languettes dans la direction inverse, en libérant le dernier gobelet de la deuxième colonne.

Grâce à la structure proposée par l'invention, chaque gobelet est séparé du gobelet immédiatement suivant de la pile par un couple de languettes, situées de part et d'autre dudit gobelet qui, après séparation, n'est retenu dans sa chute que par le couple de barrettes. Ainsi les gobelets tombent un à un dans le conduit de réception et de guidage, pour se poser sur le plateau support. En cette position, le gobelet se trouve dans la trajectoire de chute des aliments frits tombant du panier lorsque la porte de la cuve de friture occupe sa position extrême d'ouverture.

Avantageusement, une partie de la paroi latérale du conduit de réception et de guidage, solidaire d'une porte d'accès, est mobile entre une position de fermeture et une position d'ouverture. En position d'ouverture, le gobelet est accessible à l'utilisateur.

Une forme d'exécution de l'invention est décrite ci-après à titre d'exemple non limitatif, par référence aux dessins annexés dans lesquels :

la figure 1 est une coupe de l'ensemble cuve de friture/réservoir d'huile de la friteuse ;

la figure 2 est une vue de côté de l'ensemble de la figure 1 ;

la figure 3 est une vue de dessus des conduites reliant le réservoir d'huile et la cuve ;

la figure 4 montre l'implantation des vérins commandant l'ouverture de la porte de la cuve ;

la figure 5 représente, en coupe, l'unité de conservation et de distribution des aliments surgelés ;

la figure 6 représente, en coupe, les moyens de dosage des aliments surgelés, et

les figures 7 et 8 montrent respectivement de côté et de face, le distributeur de gobelets.

La friteuse selon l'invention comprend principalement :

une unité de conservation et de distribution d'aliments surgelés (figure 5), renfermant :

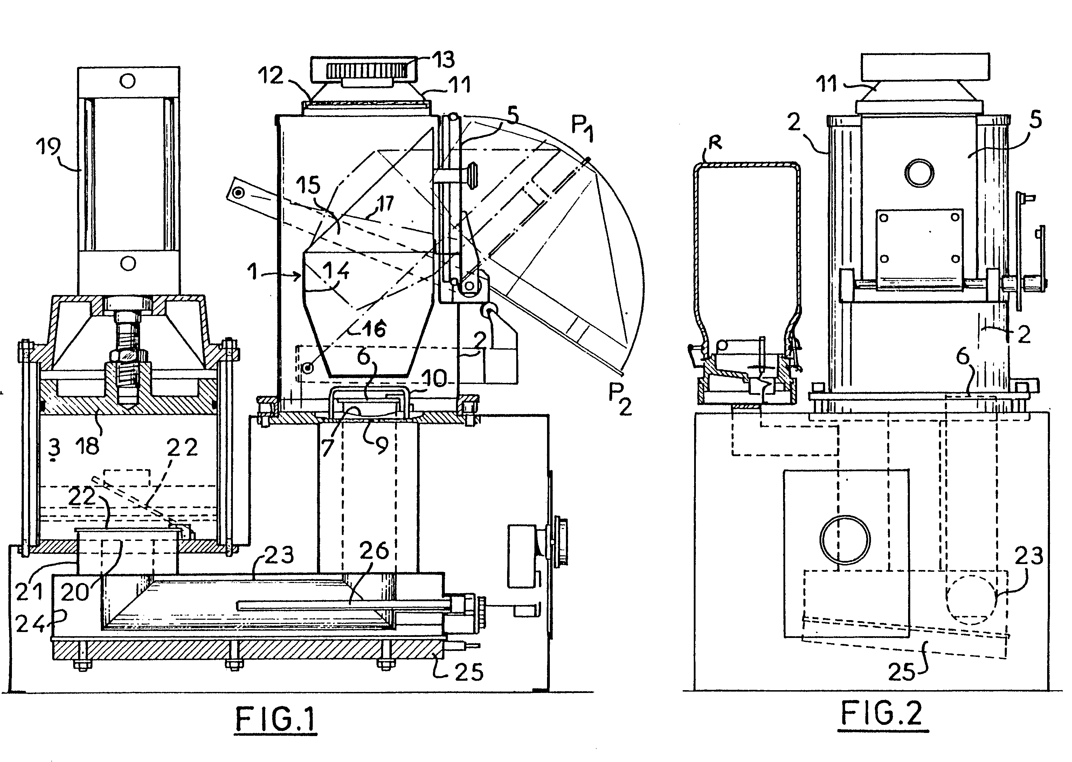

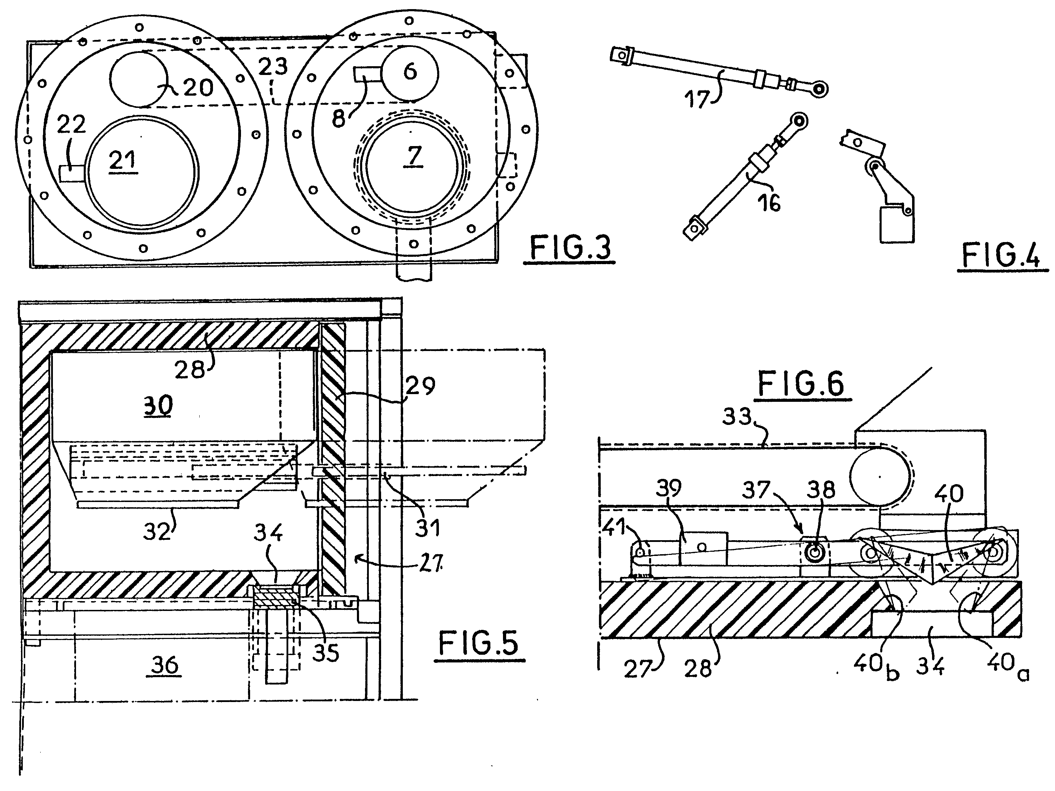

des moyens de dosage de portions successives d'aliments (fig. 6), qui pèsent une quantité déterminée d'aliments et les font tomber dans un panier à friture, dont est munie

une cuve de friture 2 (fig. 1), alimentée en huile par

un réservoir d'huile 3 (fig. 1) ;

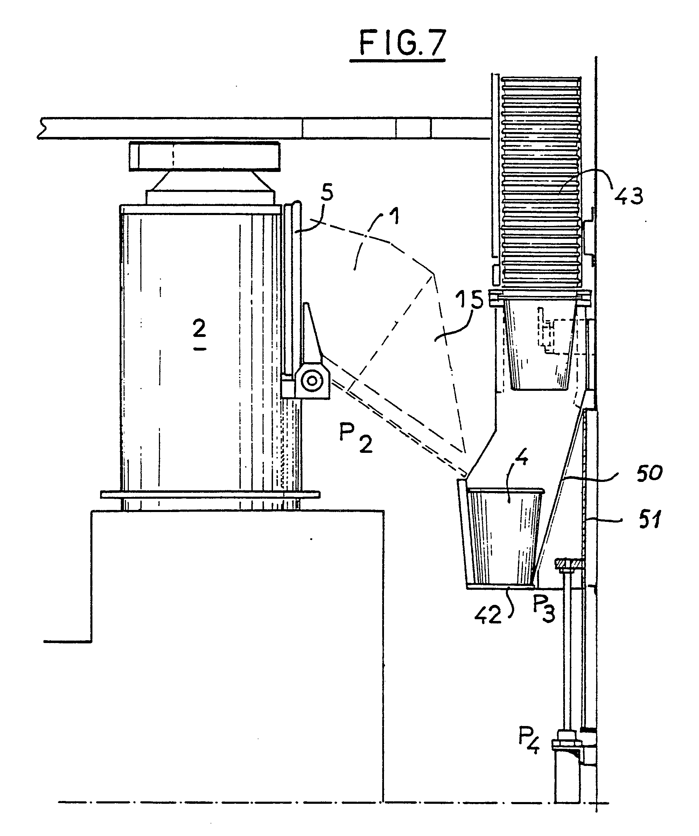

une unité distributrice de gobelets (fig. 7) délivrant des gobelets 4 qui recueillent les aliments frits lors du déchargement du panier 1.

Ces différents éléments constitutifs et leur fonctionnement vont être décrits ci-après, en commençant par la partie « friteuse » proprement dite.

Comme il ressort des figures 1 et 2, la cuve de friture 2 constitue une enceinte fermée accessible, de l'extérieur, par une porte 5. La zone de contact entre la porte 5 et l'ouverture de la cuve qu'obture cette porte 5 est garnie d'un joint en silicone assurant l'étanchéité. Le fond de la cuve comporte une ouverture d'admission d'huile 6 et une ouverture d'évacuation d'huile 7 bien visibles à la fig. 3. L'ouverture d'admission d'huile 6 est munie d'un clapet 8 ne s'ouvrant que sous l'effet d'une pression positive exercée depuis l'extérieur de la cuve 2. Un dispositif de filtration 9, pourvu d'une poignée 10 pour le démontage, est disposé sur l'ouverture d'évacuation 7. A sa partie supérieure, la cuve de friture 2 est pourvue d'une hotte d'aspiration d'air 11 garnie d'un filtre à matières grasses 12 remplaçable et elle est réunie à une turbine 13. La sortie de la turbine 13 est raccordée à une ouverture, non représentée, prévue à mi-hauteur de la cuve 2. Sur la conduite de raccordement, également non représentée, est interposé un dispositif de condensation de vapeur d'eau et d'élimination des condensats. La cuve 2 renferme un panier à friture 1 dont le fond 14 est en grillage métallique. Du côté de la porte 5, le panier se prolonge par une partie pleine en acier inoxydable formant déflecteur 15. Le fond plat de ce déflecteur 15 est coextensif à la porte 5 et est fixé sur cette dernière. Il s'ensuit que le panier 1 est solidarisé de la porte 5. Le bas de la porte 5 est monté pivotant sur la paroi de la cuve 2. Un couple de vérins 16 et 17 (fig. 4) commande l'ouverture de la porte 5. Le vérin 16 la déplace entre sa position de fermeture et la position P1 (fig. 1) et le vérin 17 entre cette position P1 et la position P2 (fig. 1). Lorsque la porte 5 est fermée, le joint de silicone vient s'écraser dans un logement prévu à cet effet, sous l'action de la pression exercée par le vérin 16.

Le réservoir d'huile 3 revêt la forme d'un cylindre dans lequel coulisse un piston 18 soumis à l'effet d'un vérin 19. Le fond du réservoir 3 est pourvu d'une ouverture de refoulement d'huile 20 et d'une ouverture de réadmission d'huile 21 munie d'un clapet 22 qui ne s'ouvre que sous l'effet d'une pression négative intérieure au réservoir 3.

L'ouverture de refoulement d'huile 20 du réservoir 3 est réunie par une conduite 23 à l'ouverture d'admission d'huile 6 de la cuve 2 et l'ouverture d'évacuation d'huile de la cuve 2 est réunie par une conduite 24 à l'ouverture de réadmission d'huile 21 du réservoir 3.

La conduite 23 est incluse dans la conduite 24 formant manchon et dont la base est pourvue de moyens de chauffage électrique adaptés à porter l'huile à la température de friture voulue, réglée grâce à un thermostat 26. Il est également prévu un thermostat de sécurité, non représenté, interrompant le chauffage en cas de surchauffe.

Le niveau d'huile dans le réservoir 3 est maintenu constant grâce à une réserve R appropriée (fig. 2).

Si l'on se reporte maintenant aux figures 5 et 6, on voit que l'unité de conservation et de dosage des aliments surgelés est constituée d'un compartiment 27 pourvu d'une isolation thermique 28. Il est prévu des moyens réfrigérants 36, adaptés au maintien d'une température propre à la conservation convenable des aliments surgelés telle que — 18 °C, le compartiment 27 s'ouvre par une porte latérale 29 qui permet d'en extraire un bac 30 de stockage. Ce bac 30 coulisse dans des glissières appropriées 31. La base du bac 30 forme une trémie 32 dont l'ouverture débouche au-dessus d'un tapis convoyeur 33 (fig. 6).

Une ouverture 34 d'évacuation d'aliments est pratiquée dans la base de l'enceinte 27. Cette ouverture 34 est obturable par une trappe pivotante 35.

Il est prévu, dans le compartiment 27, une balance 37 dont le fléau pivotant autour de l'axe 38 est muni, sur l'un de ses bras, d'un contrepoids 39 et, sur l'autre de ses bras, d'un plateau récepteur 40.

Le contrepoids est choisi en fonction du poids d'aliments surgelés devant former une dose. Sur l'arc décrit par l'extrémité du bras portant le contrepoids se trouvent des moyens interrupteurs 41 intervenant sur le circuit de commande d'avancée du tapis convoyeur 33.

Le plateau récepteur 40, qui se trouve à l'aplomb de l'une des extrémités du tapis convoyeur 33, est formé en deux parties 40a et 40b susceptibles de se rapprocher ou de s'écarter. A l'état rapproché, elles forment un réceptacle pour les aliments tombant du tapis convoyeur 33. Leur écartement est commandé par une sollicitation extérieure, telle que l'introduction d'une pièce dans un dispositif de commande approprié.

L'ouverture 34 de l'enceinte 27 est située à l'aplomb du déflecteur 15 du panier 1 lorsque la porte 5 occupe la position P1.

La position P2 dirige ce même déflecteur vers un gobelet 4 (fig. 7) reposant sur un plateau support 42. Ce gobelet 4 provient de l'unité distributrice de gobelets que l'on va maintenant décrire.

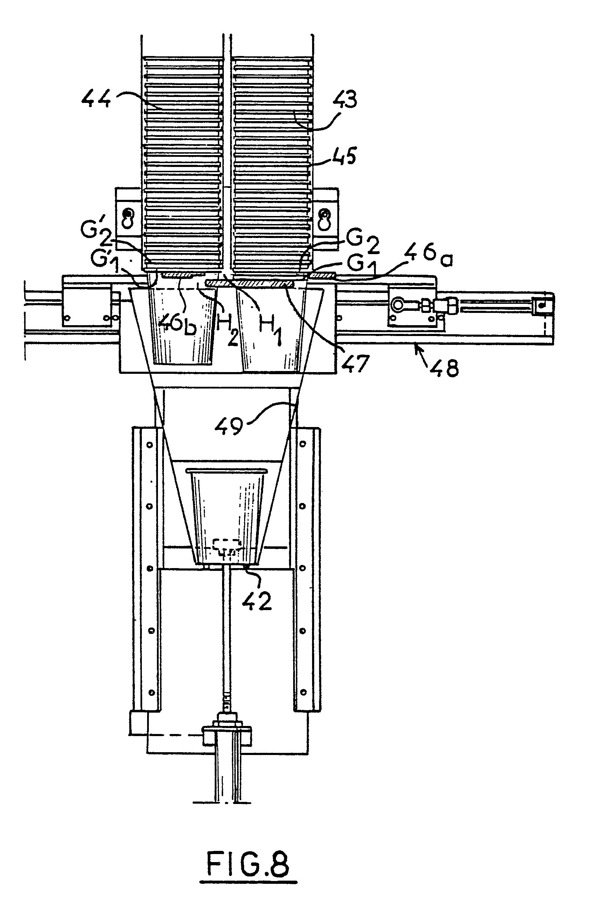

Si l'on se réfère aux figures 7 et 8, on voit que les gobelets sont empilés en deux colonnes 43 et 44. Leur chute est empêchée par des moyens de séparation et de retenue les soutenant sous leur rebord 45. Plus précisément, il est prévu de part et d'autre des gobelets, des languettes 46a et 46b et une barrette 47. Un mécanisme approprié déplace les languettes selon l'horizontale $H_1$ et la barrette selon l'horizontale $H_2$. La distance qui sépare la face inférieure des languettes 46a et 46b de la face supérieure de la barrette 47 est au moins égale à l'épaisseur du rebord 45 des gobelets. L'extrémité d'attaque des languettes 46a et 46b est profilée de manière à faciliter la pénétration de ces languettes entre deux rebords de gobelets successifs de la pile. La barrette 47 soutient le dernier gobelet G1 de la colonne 43, tandis que le dernier gobelet G'1 de l'autre colonne 44 est soutenu par la languette 46b et que l'autre languette 46a assure la séparation entre le gobelet G1 et le gobelet G2 immédiatement suivant.

Lorsque le mécanisme 48 est actionné, la barette 47 est repoussée sous la colonne 44, en libérant le gobelet G1 qui tombe dans le conduit de guidage et de réception 49 et qui vient occuper la place indiquée par le gobelet 4. Simultanément, les languettes 46a et 46b sont repoussées dans le même sens que la barrette 47 : la languette 46a vient ainsi soutenir le rebord du gobelet G2 tandis que la languette 46b libère le gobelet G'1 dont le rebord vient buter sur la barrette 47 occupant sa nouvelle position. Pour la libération du gobelet suivant G'1, les languettes 46a et 46b et la barrette 47 sont ramenées sur la droite, grâce à quoi la barrette 47 et la languette 46a sortent respectivement du chemin de chute des gobelets des colonnes 44 et 43, tandis que la barrette 47 et la languette 46b viennent soutenir respectivement les derniers gobelets G2 et G'2.

Comme il ressort des figures 7 et 8, le plateau support 42 du gobelet 4 constitue l'extrémité du conduit de guidage et de réception 49. Ce conduit 49 comporte une partie 50 solidaire d'une porte d'accès 51 et mobile entre une position P3 de fermeture et une position P4 d'ouverture, pour laquelle le gobelet 4 est accessible à l'utilisateur.

Le fonctionnement de la friteuse est le suivant :

Entre deux utilisations, une dose d'aliments précédemment pesée est en attente sur le plateau récepteur 40 de la balance à l'intérieur de l'unité de conservation et de dosage. La cuve de friture 2 est fermée et vide. Le piston 18 du réservoir d'huile est en haut de sa course et de l'huile emplit la conduite 23. Les moyens de chauffage électrique 25 sont sous tension, maintenant cette huile à une température de l'ordre de 180 °C.

Un gobelet G1 retenu par la barrette 47 est prêt à tomber.

Lorsqu'un utilisateur désire une portion d'aliments, il déclenche les différents mécanismes de la friteuse, soit en pressant sur un bouton, soit en introduisant une pièce de monnaie ou un jeton dans un dispositif approprié.

Le piston s'abaisse alors dans le réservoir 3 en refoulant l'huile dans la conduite 23. Sous l'effet de la pression le clapet 8 de l'ouverture d'admission s'ouvre et une quantité d'huile à 180 °C pénètre dans la cuve de friture 2. En fin de course du piston 18, il n'y a plus de pression exercée et le clapet 8 se referme. En même temps que le piston, la turbine 13 a été actionnée, et elle brasse l'air en circuit fermé, en le filtrant au passage.

Simultanément, le vérin 16 repousse la porte 5 jusqu'à la position P1 en basculant le panier 1 de telle sorte que son déflecteur 15 vienne à l'aplomb de l'ouverture 34 de l'unité de conservation d'aliments 27. La trappe 35 pivote alors et laisse tomber dans le panier 1 la portion d'aliments que supportait jusqu'ici le plateau récepteur 40 de la balance. Les deux parties 40a et 40b de ce plateau s'écartent, en effet, en même temps que la trappe s'ouvre. Le vérin 16 referme la porte 5 en plongeant du même coup le panier 1 et son contenu dans le bain de friture.

La sollicitation extérieure déclenche également le mécanisme 48 qui déplace les languettes 46a, 46b et la barrette 47 en libérant un gobelet 4 qui vient garnir le plateau support 42.

Après environ 40 secondes, la cuisson est terminée ; le piston 18 remonte en aspirant l'huile de friture au travers du dispositif de filtration 9 garnissant l'ouverture d'évacuation 7 de la cuve 2. L'huile passe dans la conduite 24 et est réadmise dans le réservoir 3 par l'ouverture 21 en repoussant le clapet 22.

Pendant la vidange de la cuve 2, les aliments frits s'égouttent. Le vérin 16, puis le vérin 17, repoussent la porte 5 jusqu'en position P2. Les aliments frits tombent alors du panier 1 dans le gobelet 4.

Tandis que le vérin 17, puis le vérin 16 referment la porte 5, la partie 50 du conduit de guidage et de réception 49 ainsi que la porte d'accès 51 sont abaissées, ce qui permet à l'utilisateur de saisir le gobelet garni d'une portion d'aliments frits.

Pendant ce temps, le circuit du tapis convoyeur 33 a été mis sous tension, des aliments surgelés sont venus tomber dans le plateau récepteur 40 de la balance 37 jusqu'à concurrence du contrepoids 39. Le poids voulu atteint, le tapis convoyeur 33 s'est arrêté, une nouvelle portion d'aliments surgelés demeurant en attente sur le plateau-récepteur.

Une fois le gobelet pris par l'utilisateur, la partie mobile 50 du conduit de guidage 49 et la porte 51 remontent en position P3 et la turbine 13 s'arrête.

La friteuse peut alors être actionnée de nouveau.

**Revendications**

1. Procédé de remplissage temporaire d'une cuve de friteuse à l'aide d'huile se trouvant à une température nettement supérieure à la température ambiante et d'évacuation de cette huile après filtration, qui consiste à appliquer :

a) pour le remplissage, une pression à la surface de l'huile contenue dans un réservoir (3) étanche à l'air en permettant à l'huile ainsi déplacée de sortir dudit réservoir (3) en direction de la cuve (2), et

b) pour l'évacuation, une dépression à la surface de l'huile contenue dans le réservoir (3) en n'autorisant le retour de l'huile précédemment injectée dans la cuve qu'au travers d'un dispositif de filtration (9), caractérisé en ce que le remplissage et l'évacuation sont séquentiels et en ce que sont prévus entre le réservoir (3) et la cuve (2), des moyens (25) de chauffage de l'huile contenue dans une zone (23) reliant le réservoir à la cuve, de sorte que l'admission dans ladite zone (23) de l'huile déplacée à l'étape (a) en chasse le volume correspondant d'huile chaude, laquelle pénètre dans la cuve (2).

2. Procédé selon la revendication 1, caractérisé en ce que l'huile pénètre et sort de la cuve (2) au niveau de son fond.

3. Friteuse industrielle alimentée, d'une part, en aliments surgelés consommables après friture et, d'autre part, en huile, caractérisée en ce qu'elle comprend :

— un réservoir d'huile (3), étanche à l'air, formant cylindre et muni d'un piston (18), ledit réservoir (3) étant pourvu d'une ouverture de refoulement d'huile (20) et d'une ouverture de réadmission d'huile (21) munie de moyens obturateurs (22) qui ne s'ouvrent que sous l'effet d'une pression négative intérieure au réservoir (3) ;

— une cuve de friture (2) pourvue d'une part, d'une ouverture d'alimentation en huile (6), munie de moyens obturateurs (8) qui ne s'ouvrent que sous l'effet d'une pression positive extérieure à la cuve (2) et d'autre part, d'une ouverture d'évacuation d'huile (7) garnie de moyens de filtration (9) ;

— une première conduite (23) reliant l'ouverture de refoulement (20) du réservoir et l'ouverture d'alimentation (6) de la cuve, avec interposition, entre ces ouvertures, de moyens de chauffage (25) de l'huile contenue dans ladite première conduite (23), et

— une seconde conduite (24) reliant l'ouverture d'évacuation (7) de la cuve et l'ouverture de réadmission (21) du réservoir.

4. Friteuse selon la revendication 3, caractérisée en ce que l'ouverture d'alimentation en huile (6) et l'ouverture d'évacuation d'huile (7) sont prévues au niveau du fond de la cuve (2).

5. Friteuse selon la revendication 3 ou 4 caractérisée en ce que la cuve (2) forme une enceinte hermétiquement fermée où règne constamment une pression sensiblement égale à la pression atmosphérique.

6. Friteuse selon l'une quelconque des revendications 3 à 5 et comprenant une unité de conservation (27) des aliments surgelés et de dosage de portions successives de ces aliments, cette unité (27) étant formée d'un compartiment (28) fermé, isolé thermiquement, maintenu à une température appropriée, et renfermant

— un bac à aliments surgelés (30) s'ouvrant sur des moyens convoyeurs (33) ;

— des moyens convoyeurs (33) recueillant les aliments en provenance dudit bac (30) et les acheminant vers le plateau récepteur (40) d'une balance (37) ;

— une balance (37) dont le plateau récepteur (40) de produits à peser comporte des moyens d'évacuation qui débouchent au-dessus d'une ouverture (34) pratiquée dans la paroi du compartiment ;

— des organes commandant l'avancée des moyens convoyeurs en réponse aux indications fournies par la balance, et

— des organes commandant le déclenchement des moyens d'évacuation du plateau récepteur (40) de la balance (37), en réponse à une sollicitation extérieure, caractérisée en ce que le plateau récepteur (40) de la balance (37) revêt la forme d'une cuvette dont le fond est constitué par le rapprochement des bords libres d'éléments séparés (40a) et (40b) constituant ladite cuvette, ces éléments étant montés pivotants de manière à pouvoir se rapprocher l'un de l'autre (position de pesée) ou à s'écarter l'un de l'autre (position d'évacuation de la portion pesée).

7. Friteuse selon l'une quelconque des revendications 3 à 6 et comprenant une cuve (2) garnissable d'huile de friture et un panier ajouré (1) adapté au trempage desdits aliments dans l'huile de la cuve, ladite cuve (2) étant constituée d'une enceinte fermée comportant une ouverture latérale, le panier ajouré (1) se prolongeant à sa partie supérieure, du côté de l'ouverture, par un déflecteur qui permet le chargement et le déchargement du panier ajouré (1) par exposition du déflecteur (15) à l'extérieur de l'enceinte, au travers de l'ouverture de la cuve (2), caractérisée en ce que l'ouverture est obturable hermétiquement par une porte (5) et en ce que le déflecteur (15) est solidarisé de ladite porte (5) de manière telle que l'ouverture de la porte (5) expose le déflecteur (15) à l'extérieur de l'enceinte.

8. Friteuse selon la revendication 7, caractérisée en ce que le fond du déflecteur (15) est coextensif à la porte (5) et en ce que le bas de la porte (5) est monté pivotant sur la paroi de l'enceinte.

9. Friteuse selon l'une quelconque des revendications 3 à 8 dans laquelle la cuve (2) comporte des moyens (13) assurant la circulation de l'air entre une entrée et une sortie d'air pratiquées dans les parois de la cuve, avec interposition d'un dispositif filtrant (12) sur le circuit de sortie d'air, caractérisé en ce que, en aval du dispositif filtrant (12), ledit circuit de sortie d'air est relié à l'entrée d'air.

10. Friteuse selon l'une quelconque des revendications 3 à 9, équipée d'un distributeur de gobelets du type comprenant un réservoir de gobelets (43), (44) empilés les uns dans les autres, des moyens escamotables de retenue desdits gobelets qui comprennent sur deux côtés opposés des gobelets deux languettes (46a) et (46b) déplaçables sur la même horizontale (H1), ces languettes coopérant avec le rebord (45) du gobelet inférieur de la colonne, des organes (48) commandant l'escamotage des moyens de retenue pour libérer un par un les gobelets G d'une colonne, un conduit de réception et de guidage (49) du gobelet libéré et un plateau support (42) pour le gobelet prêt à l'usage, caractérisé en ce que le réservoir de gobelets renferme au moins deux colonnes (43), (44) de gobelets empilés et en ce que les moyens escamotables comprennent en outre, sur deux côtés opposés des gobelets, une barrette (47) déplaçable sur une autre horizontale (H2) plus basse que (H1), la face inférieure des languettes (46a) et (46b) étant séparée de la face supérieure de la barrette (47) d'une hauteur au moins égale à celle du rebord (45) des gobelets la position relative des languettes (46a) et (46b) et de la barrette (47) étant telle qu'au repos, la barrette soutient le rebord (45) du dernier gobelet (G1) de la première colonne (43) tandis que la deuxième languette (46b) soutient le rebord (45) du dernier gobelet (G'1) de la deuxième colonne 44, lesdits moyens de commande (48) agissant de manière que, dans un premier temps, ils déplacent la barrette (47) hors du chemin de chute naturelle des gobelets G de la première colonne (43) et l'amènent dans une position interrompant le chemin de chute naturelle des gobelets (G') de la deuxième colonne (44), tandis qu'animées du même mouvement, la première languette (46) vient retenir le gobelet (G2) de la première colonne (43) suivant celui qui vient d'être libéré et la deuxième languette (46b) sort du chemin de chute naturelle des gobelets (G') de la deuxième colonne (44), en libérant un gobelet (G'1) qui est retenu par la barrette (47), et que, dans un deuxième temps, ils déplacent la barrette (47) et les languettes (46a) et (46b) dans la direction inverse en libérant le dernier gobelet (G'1) de la deuxième colonne (44).

11. Friteuse selon la revendication 10, caractérisée en ce que le conduit de guidage et de réception (49) comporte une partie (50) solidaire d'une porte d'accès (51) et mobile entre une position de fermeture (P3) et une position d'ouverture (P4).

12. Friteuse selon les revendications 7 et 10 considérées conjointement, caractérisée en ce que le gobelet (4) reposant sur le plateau support (42) se trouve dans la trajectoire de chute des aliments frits tombant du panier (1) lorsque la porte (5) de la cuve de friture (2) occupe sa position de déchargement du panier.

## Claims

1. A method for the temporary filling of a deepfryer tank with oil at a temperature substantially higher than the ambient temperature and for removing this oil after filtration, which consists in applying :

a) for filling, a pressure to the surface of the oil contained in an air tight reservoir (3) while allowing the oil thus displaced to leave said reservoir (3) in the direction of the tank (2), and

b) for removal, a depression at the surface of the oil contained in the reservoir (3) while allowing the oil previously injected into the tank to return only through a filtration device (9), characterized in that filling and removal are sequential and in that, between the reservoir (3) and the tank (2), means (25) are provided for heating the oil contained in a zone (23) connecting the reservoir to the tank, so that the intake into said zone (23) of the oil displaced in step (a) drives therefrom the corresponding volume of hot oil, which penetrates into thetank (2).

2. The method according to claim 1, characterized in that the oil penetrates into and leaves the tank (2) at the level of its bottom.

3. An industrial deep-fryer fed, on the one hand, with deep frozen foods consumable after frying and, on the other, with oil, characterized in that it comprises :

— an air tight oil reservoir (3) forming a cylinder and having a piston (18), said reservoir (3) being provided with an oil discharge opening (20) and an oil readmission opening (21) having closure means (22) which only open under the effect of negative pressure inside the reservoir (3) ;

— a frying tank (2) having, on the one hand, an oil supply opening (6) with closure means (8) which only open under the effect of a positive pressure outside the tank (2) and, on the other hand, an oil removal opening (7) comprising filtration means (9) ;

— a first duct (23) connecting the discharge opening (20) of the reservoir and the supply opening (6) of the tank together with the interpositioning, between these openings, of means (25) for heating the oil contained in said first duct (23) ; and

— a second duct (24) connecting the removal opening (7) of the tank and the readmission opening (21) of the reservoir together.

4. The deep-fryer according to claim 3, characterized in that the oil supply opening (6) and the oil removal opening (7) are provided at the level of the bottom of the tank (2).

5. The deep-fryer according to claim 3 or 4, characterized in that the tank (2) forms a hermetically sealed enclosure in which a pressure reigns constantly substantially equal to the atmospheric pressure.

6. The deep-fryer according to any one of claims 3 to 5 and comprising a unit (27) for preserving deep frozen foods and for delivering successive predetermined portions of these foods, this unit (27) being formed by a heat insulated closed compartment (28) kept at an appropriate temperature and containing :

— a deep frozen food container (30) opening onto conveyor means (33) ;

— conveyor means (33) collecting the foods coming from the container (30) and conveying them to the receiving plate (40) of a weighing machine (37) ;

— a weighing machine (37) whose plate (40) receiving products to be weighed comprises discharge means which open above an opening (34) formed in the wall of the compartment ;

— means controlling the advancing movement of the conveyor means in response to the indications supplied by the weighing machine, and

— means controlling the actuation of the removal means of the receiving plate (40) of the weighing machine (37) in response to an external urging force, characterized in that the receiving plate (40) of the weighing machine (37) is in the form of a bowl whose bottom is formed by drawing together the free edges of separate elements (40a) and (40b) forming said bowl, these elements being mounted for pivoting so as to be able to draw close to one another (weighing position) or to move away from one another (position for removal of the weighed portion).

7. The deep-fryer according to any one of claims 3 to 6 and comprising a tank (2) fillable with frying oil and a perforated basket (1) adapted for plunging said foods in the oil of the tank, said tank (2) being formed by a closed enclosure comprising a side opening, the perforated basket (1) being extended at its upper part, on the same side as the opening, by a deflector which allows loading and unloading of the perforated basket (1) by exposing the deflector (15) to the outside of the enclosure through the opening in the tank (2), characterized in that the opening is hermetically closable by a door (5) and in that the deflector (15) is secured to said door (5) so that the opening in the door (5) exposes the deflector (15) to the outside of the enclosure.

8. The deep-fryer according to claim 7, characterized in that the bottom of the deflector (15) is coextensive with the door (5) and in that the bottom of the door (5) is pivotally mounted on the wall of the enclosure.

9. The deep-fryer according to any one of claims 3 to 8, in which the tank (2) comprises means (13) providing the flow of air between an air inlet and outlet formed in the walls of the tank, with interpositioning of a filtering device (12) in the air outlet circuit, characterized in that, downstream of the filtering device (12), said air outlet circuit is connected to the air inlet.

10. The deep-fryer according to any one of claims 3 to 9, equipped with a cup dispenser of the type comprising a reservoir of cups (43), (44) stacked in one another, retractable means for retaining said cups which comprise on two opposite sides of the cups two tongues (46a) and (46b) movable along the same horizontal line (H1), these tongues cooperating with the edge (45) of the lower cup of the column, means (48) controlling retraction of the retaining means for freeing the cups G of a column one by one, a channel (49) for receiving and guiding the released cup and a support plate (42) for the cup ready for use, characterized in that the cup reservoir contains at least two columns (43), (44), of stacked cups and in that the retractable means further comprise, on two opposite sides of the cups, a bar (47) movable along another horizontal line (H2) lower than (H1), the lower face of the tongues (46a) and (46b) being separated from the upper face of the bar (47) by a height at least equal to that of the edge (45) of the cups, the relative position of the tongues (46a) and (46b) and of the bar (47) being such that, at rest, the bar supports the edge (45) of the last cup (G1) of the first column (43) whereas the second tongue (46b) supports the edge (45) of the last cup (G'1) of the second column (44), said control means (48) acting so that, in a first stage, they move the bar (47) out of the path of the natural fall of the cups G of the first column (43) and bring it into a position interrupting the natural fall path of the cups (G') of the second column (44), whereas, driven with the same movement, the first tongue (46) retains the cup (G2) of the first column (43) following the one which has just been released and the second tongue (46b) leaves the natural fall path of the cups (G') of the second column (44) while freeing a cup (G'1) which is retained by the bar (47), and so that, in a second stage, they move the bar (47) and the tongues (46a) and (46b) in the opposite direction while releasing the last cup (G'1) of the second column (44).

11. The deep-fryer according to claim 10, characterized in that the guide and reception channel (49) comprises a part (50) integral with an access door (51) and movable between a closure position (P3) and an open position (P4).

12. The deep-fryer according to claims 7 and 10, considered jointly, characterized in that the cup (4) resting on the support plate (42) is in the fall path of the fried foods falling from the basket (1) when the door (5) of the frying tank (2) occupies its position for unloading the basket.

**Patentansprüche**

1. Verfahren zum vorübergehenden Füllen eines friteusen Behälters mit Öl, das sich auf einer Temperatur befindet, die deutlich über der Umgebungstemperatur liegt, und zum Entleeren dieses Öls nach Filtration, bestehend aus der Anwendung :

a) für die Befüllung, eines Drucks auf die Oberfläche eines in einem luftdichten Vorratsbehälter (3) enthaltenen Öls, um es dem so verdrängten Öl zu erlauben, aus dem genannten Vorratsbehälter (3) in Richtung des Behälters (2) auszutreten, und

b) für das Entleeren, eines Unterdrucks auf die Oberfläche des in dem Vorratsbehälter (3) enthaltenen Öls, wobei die Rückkehr des in den Behälter zuvor eingespritzten Öls nur über eine Filtrationseinrichtung (9) gestattet wird, dadurch gekennzeichnet, daß zwischen dem Vorratsbehälter (3) und dem Behälter (2) Einrichtungen (25) zum Aufheizen des in einer Zone (23), die den Vorratsbehälter mit dem Behälter verbindet, enthaltenen Öls vorgesehen sind derart, daß der Eintritt des im Schritt (a) verdrängten Öls in die genannte Zone von dort das entsprechende Volumen heißen Öls austreibt, das in den Behälter (2) eintritt.

2. Verfahren nach Anspruch 1, dadurch gekennzeichnet, daß das Öl den Behälter (2) in Höhe seines Bodens betritt und verläßt.

3. Gewerbliche Friteuse, die einerseits mit tiefgefrorenen, nach dem Fritieren verzehrbaren Lebensmitteln und andererseits mit Öl beschickt wird, dadurch gekennzeichnet, daß sie enthält :

— einen Ölvorratsbehälter (3), der luftdicht ist und einen Zylinder bildet und mit einem Kolben (18) versehen ist, wobei der Vorratsbehälter (3) mit einer Ölstauöffnung (20) und einer Ölwiedereintrittsöffnung (21) versehen ist, die mit Verschließeinrichtungen (22) ausgerüstet sind, die sich nur unter der Wirkung eines im Innern des Vorratsbehälters (3) herrschenden Unterdrucks öffnen ;

— einen Fritierbehälter (2), der einerseits mit einer Ölzuführöffnung (6) versehen ist, die mit Verschließeinrichtungen (8) ausgerüstet ist, die sich nur unter der Wirkung eines im Innern des Behälters (2) herrschenden Überdrucks öffnen, und andererseits eine Ölauslaßöffnung (7) aufweist, die mit Filtrationseinrichtungen (9) versehen ist ;

— eine erste Leitung (23), die die Stauöffnung (20) des Vorratsbehälters mit der Zuführöffnung (6) des Behälters verbindet, wobei zwischen diesen Öffnungen die Ölheizeinrichtungen (25) angeordnet sind, die in der genannten ersten Leitung (23) enthalten sind, und

— eine zweite Leitung (24), die die Auslaßöffnung (7) des Behälters mit der Wiedereintrittsöffnung (21) des Vorratsbehälters verbindet.

4. Friteuse nach Anspruch 3, dadurch gekennzeichnet, daß die Ölzuführöffnung (6) und die Ölauslaßöffnung (7) in Höhe des Bodens des Behälters (2) vorgesehen sind.

5. Friteuse nach Anspruch 3 oder 4, dadurch gekennzeichnet, daß der Behälter (2) eine hermetisch verschlossene Hülle bildet, wo ständig ein Druck herrscht, der im wesentlichen gleich dem atmosphärischen Druck ist.

6. Friteuse nach einem der Ansprüche 3 bis 5, und eine Einheit zur Konservierung (27) der tiefgefrorenen Lebensmittel und zur Dosierung von aufeinanderfolgenden Portionen dieser Lebensmittel enthaltend, wobei diese Einheit (27) von einem Abteil (28) gebildet wird, das verschlossen, thermisch isoliert, aus einer geeigneten Temperatur gehalten ist und in sich einschließt :

— einen Trog (30) für tiefgefrorene Lebensmittel, der sich auf Fördereinrichtungen (33) öffnet ;

— Fördereinrichtungen (33), die die von dem Trog (30) stammenden Lebensmittel aufnehmen und sie auf die Aufnahmeplatte (40) einer Waage (37) leiten ;

— eine Waage (37), deren Aufnahmeplatte (40) für die zu wiegenden Produkte eine Abgabeeinrichtung enthält, die oberhalb einer Öffnung (34) mündet, die in der Wand des Abteils ausgebildet ist ;

— Steuerorgane für den Antrieb der Fördereinrichtungen in Abhängigkeit von Angaben, die von der Waage geliefert werden, und

— Einrichtungen, die die Auslösung der Abgabeeinrichtung der Aufnahmeplatte (40) der Waage (37) in Abhängigkeit von einer äußeren Belastung steuern, dadurch gekennzeichnet, daß die Aufnahmeplatte (40) der Waage (37) die Form einer Schale hat, deren Boden von der Annäherung der freien Ränder von getrennten Elementen (40a, 40b) gebildet ist, die die Schale bilden, wobei diese Elemente derart schwenkbar montiert sind, daß sie sich aneinander annähern können (Wiegestellung) oder sich voneinander entfernen können (Abgabestellung für die gewogene Portion).

7. Friteuse nach einem der Ansprüche 3 bis 6, enthaltend einen Behälter (2), der mit Fritieröl und mit einem durchbrochenen Korb (1) beschickt ist, welchletzterer dazu eingerichtet ist, die genannten Lebensmittel in das Öl im Behälter einzutauchen, wobei der Behälter (2) von einer geschlossenen Hülle gebildet ist, die eine Queröffnung aufweist, der durchbrochene Korb (1) sich in seinem oberen Teil auf der Seite der Öffnung in einer Schütte verlängert, die die Beladung und Entladung des durchbrochenen Korbes (1) durch Aussetzen der Schütte (15) des Äußeren um die Hülle durch die Öffnung des Behälters (2) hindurch erlaubt, dadurch gekennzeichnet, daß die Öffnung durch eine Tür (5) hermetisch verschließbar ist und daß die Schütte (15) fest an der Tür (5) so angebracht ist, daß das Öffnen der Tür (5) die Schütte (15) dem Äußeren um die Hülle aussetzt.

8. Friteuse nach Anspruch 7, dadurch gekennzeichnet, daß der Boden der Schütte (15) sich zusammen mit der Tür (5) erstreckt und daß der Fuß der Tür (5) schwenkbar an der Wand der Hülle montiert ist.

9. Friteuse nach einem der Ansprüche 3 bis 8, bei der der Behälter (2) eine Einrichtung (13) enthält, die die Zirkulation von Luft zwischen einem Lufteingang und einem Luftausgang sicherstellt, die in den Wänden des Behälters ausgebildet sind, wobei eine Filtereinrichtung (12) in den Luftaustrittskreis eingeschaltet ist, dadurch gekennzeichnet, daß stromaufwärts der Filtereinrichtung (12) der Luftaustrittskreis mit dem Lufteintritt verbunden ist.

10. Friteuse nach einem der Ansprüche 3 bis 9, versehen mit einem Becherspender der Art, die einen Vorrat an Bechern (43, 44) enthält, die übereinander gestapelt sind, einziehbare Einrichtungen zum Zurückhalten der genannten Becher, die auf zwei den Bechern gegenüberliegenden Seiten zwei Zungen (46a, 46b) enthalten, die in der gleichen Horizontalen (H1) verschiebbar sind, wobei diese Zungen mit dem Rand (45) des untersten Bechers der Säule zusammenwirken, Einrichtungen (48), die das Einziehen der Zurückhalteeinrichtungen steuern, um nacheinander die Becher (G) einer Säule freizugeben, eine Leitung (49) zum Aufnehmen und Führen der freigegebenen Becher, und eine Tragplatte (42) für den zur Verwendung bereiten Becher, dadurch gekennzeichnet, daß der Bechervorrat wenigstens zwei Säulen (43, 44) von übereinander gestapelten Bechern enthält und daß die einziehbaren Einrichtungen weiterhin auf zwei den Bechern gegenüberliegenden Seiten einen in einer anderen Horizontalen (H2), tiefer als die erste Horizontale (H1) verschiebbaren Steg (47) enthalten, wobei die Unterseiten der Zungen (46a und 46b) von der Unterseite des Steges (47) um eine Höhe getrennt sind, die wenigstens gleich der des Randes (45) der Becher ist und die Position der Zungen (46a, 46b) in bezug auf den Steg (47) derart ist, daß in der Ruhelage der Steg den Rand (45) des letzten Bechers (G1) der ersten Säule (43) hält, während die zweite Zunge (46b) den Rand (45) des letzten Bechers (G'1) der zweiten Säule (44) hält, wobei die Steuereinrichtungen (48) in der Weise wirken, daß zu einem ersten Zeitpunkt sie den Steg (47) aus dem Weg des natürlichen Falls der Becher (G) der ersten Säule (43) verschieben und ihn in eine Position führen, in der der Weg des natürlichen Falls der Becher (G') der zweiten Säule (44) unterbrochen ist, während, betätigt durch dieselbe Bewegung, die erste Zunge (46a) zum Zurückhalten des Bechers (G2) der ersten Säule (43) kommt, der jenem folgt, der gerade freigegeben worden ist, und die zweite Zunge (46b) den Weg des natürlichen Falls der Becher (G') der zweiten Säule (44) verläßt und dabei einen Becher (G'1) freigibt, der von dem Steg (47) zurückgehalten wird, und daß zu einem zweiten Zeitpunkt sie den Steg (47) und die Zungen (46a, 46b) in der umgekehrten Richtung verstellen, wobei der letzte Becher (G'1) der zweiten Säule (44) freigegeben wird.

11. Friteuse nach Anspruch 10, dadurch gekennzeichnet, daß die Leitung (49) zur Führung und Aufnahme einen Abschnitt (50) enthält, der fest mit einer Zugangstür (51) verbunden ist und zwischen einer Schließstellung (P3) und einer Öffnungsstellung (P4) beweglich ist.

12. Friteuse nach den Ansprüchen 7 und 10, zusammenwirkend betrachtet, dadurch gekennzeichnet, daß der Becher (4), der auf der Trägerplatte (42) ruht, sich im Fallweg von fritierten Lebensmitteln befindet, die aus dem Korb (1) fallen, wenn die Tür (5) des Fritierbehälters (2) die Entladungsposition des Korbes einnimmt.

FIG.1

FIG.2

FIG.3

FIG.4

FIG.5

FIG.6

0 060 204

# FIG.7

FIG.8